Europäisches Patentamt

European Patent Office

Office européen des brevets

(19)

(11) Veröffentlichungsnummer: **0 029 180**
**A1**

# (12) EUROPÄISCHE PATENTANMELDUNG

(21) Anmeldenummer: 80106833.9

(22) Anmeldetag: 06.11.80

(51) Int. Cl.³: **F 24 J 3/02**

(30) Priorität: 17.11.79 DE 2946525

(43) Veröffentlichungstag der Anmeldung: **27.05.81**
**Patentblatt 81/21**

(84) Benannte Vertragsstaaten: **AT BE CH DE FR GB IT LI LU NL SE**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Oertel, Hans, Dr., Am Heinzberg 8, D-6239 Eppstein/Taunus (DE)**
Erfinder: **Rapp, Bruno, Spiessgasse 36, D-6146 Alsbach-Hähnlein (DE)**

(54) **Gehäuse für Solarkollektoren.**

(57) Die Erfindung betrifft ein Gehäuse, aus thermoplastischem Kunststoff, für Solarkollektoren, das in ein übliches Ziegeldach durch Ersatz einer Gruppe von Ziegeln eingebaut werden kann. Das Gehäuse besteht aus einem wannenartigen Aufnahmebehälter für den Kollektor. Der Aufnahmebehälter ist von einer umlaufenden Auflagefläche für eine lichtdurchlässige Abdeckung und einem in Form und Größe der zu ersetzenden Dachziegel-Gruppe entsprechenden Rand umgeben. Das erfindungsgemäße Gehäuse wird zwischen die Dachsparren eingesetzt und fügt sich nahtlos in die Bedachung ein.

EP 0 029 180 A1

HOECHST AKTIENGESELLSCHAFT    HOE 79/F 310    Dr.EL/cr

Gehäuse für Solarkollektoren

Die vorliegende Erfindung betrifft ein Gehäuse, aus thermoplastischem Kunststoff, für Solarkollektoren, das in ein
übliches Ziegeldach durch Ersatz einer Gruppe von Ziegeln
eingebaut werden kann.

Um Energie zu sparen, wird in zunehmendem Maße versucht,
Sonnenenergie direkt zur Erwärmung von Brauch- und Heizwasser zu nutzen. Die für diese Anwendung im Handel erhältlichen Solarkollektoren bestehen in der Regel aus
flachen Wärmetauschern aus Metall oder Kunststoff mit
einem Durchflußsystem für das zu erwärmende Wasser. Diese
Wärmetauscher werden in zur Sonne lichtdurchlässigen Gehäusen gelagert, um den sogenannten Treibhauseffekt zu
nutzen.

Zur Aufstellung solcher Solarkollektoren bieten sich die
Hausdächer an. Während dies auf Flachdächern problemlos
ist - die Kollektoren werden zur Sonne geneigt aufgestellt, um die beste Lichtausbeute zu gewährleisten -
gibt es bei Giebeldächern oft Schwierigkeiten. Werden die
Kollektoren oben auf dem Dach montiert, so bedeuten sie
eine zusätzliche Belastung des Daches und erfordern meist
eine Verstärkung des Dachstuhls. Außerdem sehen die aufgesetzten Kollektoren häßlich aus und die erforderliche behördliche Genehmigung ist oft nicht zu bekommen.

Werden die Kollektoren anstelle der Bedachung eingebaut,
treten Dichtigkeitsprobleme auf, die umfangreiche Abdichtungsarbeiten erfordern.

Es ist zwar schon vorgeschlagen worden, die Dachpfannen
selber als Kollektoren auszubilden (DE-OSen 26 42 732 und
27 29 313), hierzu sind aber völlig neue Konstruktionen
nötig, handelsübliche Wärmetauscher können nicht eingesetzt werden.

Weiterhin ist in der DE-OS 26 41 073 eine Halterung für einen Sonnenenergiekollektor beschrieben, der aus einer flachen Wanne besteht und mit einem Rahmen versehen ist, welcher räumlich der Oberflächenform der Dachhaut angepaßt ist. Diese Halterung wird anstelle einer Reihe von Ziegeln direkt auf den Dachlatten aufgesetzt und mit speziellen Profilen an denselben befestigt. Ein Nachteil bei dieser Konstruktion besteht darin, daß der Kollektor selbst aus dem Dach herausragt, was architektonisch unvorteilhaft ist. Ferner treten Dichtungsprobleme auf, da der Rahmen allseitig auf den angrenzenden Ziegeln aufliegt.

Zur Behebung dieser Schwierigkeiten wird erfindungsgemäß ein Gehäuse aus thermoplastischem Kunststoff für Solarkollektoren vorgeschlagen, das geeignet ist zum Einbau in übliche Ziegeldächer durch Ersatz einer Gruppe von Ziegeln und das dadurch gekennzeichnet ist, daß es aus einem wannenartigen Aufnahmebehälter für den Solarkollektor besteht, der von einer umlaufenden Auflagefläche für eine lichtdurchlässige Abdeckung und einem in Form und Größe der zu ersetzenden Dachziegel-Gruppe entsprechenden Rand umgeben ist, wobei die Ränder an der linken und rechten Seite des Aufnahmebehälters bei der Herstellung so breit belassen sind, daß ein unterschiedlicher Abstand der anschließenden Ziegelreihen um die Breite von 1/2 Ziegel ausgeglichen werden kann, und wobei der Aufnahmebehälter so tief ausgebildet ist, daß er zwischen die Dachsparren eintaucht.

Der wannenartige Aufnahmebehälter für den Kollektor ist vorzugsweise 500 - 700 mm breit und 900 - 1200 mm lang, besonders bevorzugt 550 - 600 mm breit und 900 - 1000 mm lang, und hat eine Tiefe von 70 - 100 mm, vorzugsweise 80 - 90 mm. Dies erlaubt die Aufnahme handelsüblicher Kollektoren. Da die Dachsparren üblicherweise einen Abstand von 550 - 750 mm haben, kann der Aufnahmebehälter jeweils zwischen zwei Dachsparren eingesetzt werden. Zur Versteifung des Aufnahmebehälters kann es vorteilhaft sein, den Wannenboden stufenförmig zu vertiefen. Die umlaufende Auflagefläche für die lichtdurchlässige Abdeckung liegt nach Einbau ins Dach auf gleicher Höhe wie die Ziegeloberfläche. Die umlaufende Auflagefläche hat zweckmäßigerweise eine Breite von 30 - 80 mm, vorzugsweise von 40-65 mm. Es ist vorteilhaft, die Auflagefläche durch eine umlaufende Nut zu unterbrechen. Dies erhöht die Verwindungssteifigkeit und erleichtert das Einsetzen und Abdichten der Abdeckung.

Der sich anschließende äußere Rand des erfindungsgemäßen Gehäuses entspricht in Form und Größe genau den zu ersetzenden Dachziegeln. Hierdurch kann das Gehäuse einfach anstelle einer Gruppe von Dachziegeln eingesetzt werden, und die Abdichtung wird genau wie bei dem übrigen Dach durch Überlappung erreicht, ohne daß eine zusätzliche Verwendung von Dichtungsmaterial erforderlich ist. Links und rechts an den Seiten wird die Auflage für die nächste Ziegelreihe bei der Herstellung so breit belassen, daß ein unterschiedlicher Abstand der Dachsparren bzw. Ziegelreihen jeweils um die Breite von 1/2 Ziegel ausgeglichen werden kann. Vor dem Einbau ist es nur erforderlich, den Rand auf die jeweils benötigte Breite abzuschneiden. Durch den Einsatz des Aufnahmebehälters zwischen die Dachsparren kann dieser ausreichend tief sein, ohne daß das Dach angehoben werden muß.

Da das Gehäuse und meist auch der Wärmetauscher aus thermoplastischem Kunststoff sind, wiegt die gesamte Anordnung weniger als eine gleichgroße Ziegelbedachung, so daß keine Verstärkung des Dachstuhls erforderlich ist und der Einbau ohne Schwierigkeiten auch in Altbaudächern vorgenommen werden kann.

Als Material für das Gehäuse eignen sich schlagfeste und witterungsbeständige thermoplastische Kunststoffe, z.B.

Vinylchlorid-Polymerisate, Polyolefine oder Styrolpolymerisate. Vorzugsweise werden elastifiziertes Polyvinylchlorid, z.B. mit Äthylen-Vinylacetat-Mischpolymerisaten modifiziertes Polyvinylchlorid oder Mischungen von Polyvinylchlorid mit chloriertem Polyäthylen, kautschukmodifiziertes Polystyrol, vor allem mit Äthylen-Propylen-Dien-Kautschuk modifiziertes Polystyrol, wie man es z.B. durch Polymerisation von Styrol in Gegenwart des Kautschuks erhält, oder lichtstabilisiertes Polyäthylen oder Polypropylen eingesetzt. Als Dien wird im Äthylen-Propylen-Dien-Kautschuk vor allem Hexadien oder Äthylidennorbornen eingesetzt. Die Polymerisate können verstärkende Füllstoffe, z.B. Glasfasern oder Talk enthalten. Übliche Additive, wie Farbstoffe, Pigmente, Antistatika, Stabilisatoren, vor allem Lichtstabilisatoren, oder Flammschutzmittel können ebenfalls zugesetzt werden. Beim modifizierten Polystyrol ist eine dunkle Einfärbung etwa in der Farbe der Ziegel möglich, so daß sich die Gehäuse sehr gut in die Bedachung einpassen.

Das erfindungsgemäße Gehäuse kann spritzgegossen oder aus vorgefertigten Platten tiefgezogen werden. Es ist z.B. möglich, das Gehäuse aus einem treibmittelhaltigen Thermoplasten spritzzugießen, so daß man einen sogenannten Integral-Schaumkörper erhält, der eine feste äußere Haut und einen geschäumten Kern hat. Ein solches im Innern geschäumtes Gehäuse hat eine höhere Stabilität und eine gute Isolationswirkung.

Vorzugsweise werden die erfindungsgemäßen Gehäuse aber durch Tiefziehen aus extrudierten Platten hergestellt, da man dabei mit relativ billigen, leicht zu variierenden Formen arbeiten kann, so daß auch kleine Serien wirtschaftlich herzustellen sind.

Für die lichtdurchlässige Abdeckung eignen sich Platten aus Glas oder durchsichtigem, bewitterungsbeständigem Kunststoff, z.B. Polymethylmethacrylat, Polycarbonat, schlagzähem Polyvinylchlorid oder Mischpolymerisaten aus Äthylen und Tetrafluoräthylen. Im Handel sind auch Hauben aus Polymethylmethacrylat für die Abdeckung erhältlich.

Eine gute Nutzung der Sonnenenergie erreicht man, wenn unterhalb der ersten Abdeckung, z.B. der Haube aus Polymethylmethacrylat, noch eine Kunststoffolie aus den genannten Kunststoffen, vorzugsweise aus Polyester oder Äthylen-Tetrafluoräthylen-Copolymer, eingespannt ist.

Die Abdeckung wird unter Zwischenlegung einer Dichtung auf der umlaufenden Auflagefläche oder in der umlaufenden Nut dicht befestigt.

Als Kollektoren können handelsübliche Wärmetauscher aus Metall oder Kunststoff verwendet werden. Wegen des geringen Gewichts werden extrusionsgeblasene, flache Wärmetauscher aus Polypropylen mit rohrförmigen Durchflußkanälen bevorzugt. Die Durchflußkanäle können aus zwei Sammelkanälen mit dazu senkrecht verlaufenden Verbindungskanälen bestehen, oder sie können mäander- oder spiralförmig angeordnet sein.

Um Wärmeverluste zu vermeiden, wird der Wärmetauscher nach unten und seitlich isoliert in dem erfindungsgemäßen Gehäuse gelagert. Für die Isolation eigenen sich Kunststoffschäume, z.B. Polystyrolschaum, oder Glas- und Gesteinswolle. Die für den Anschluß erforderlichen Rohrleitungen werden am besten durch die oberen und/oder unteren Seitenwände des Aufnahmebehälters geführt. Die erfindungsgemäßen Gehäuse können einzeln oder vorzugsweise im Verbund verlegt werden. Da ihr Gewicht leichter ist als die Ziegelbedachung, kann z.B. die gesamte Südseite eines Daches mit Solarkollektoren bedeckt werden. Es kann auch vorteilhaft sein, in vertikaler Richtung jeweils eine Ziegelreihe zwischen die Kollektoren zu verlegen. Da sich die Kollektorgehäuse nahtlos in die Bedachung einfügen, kann die Bedachung ganz nach Wunsch und Bedarf mit Kollektoren ver-

- 6 -                        0029180

sehen werden.

Die Zeichnungen zeigen beispielhaft ein erfindungsgemäßes
Gehäuse für ein mit Frankfurter Pfannen gedecktes Dach.

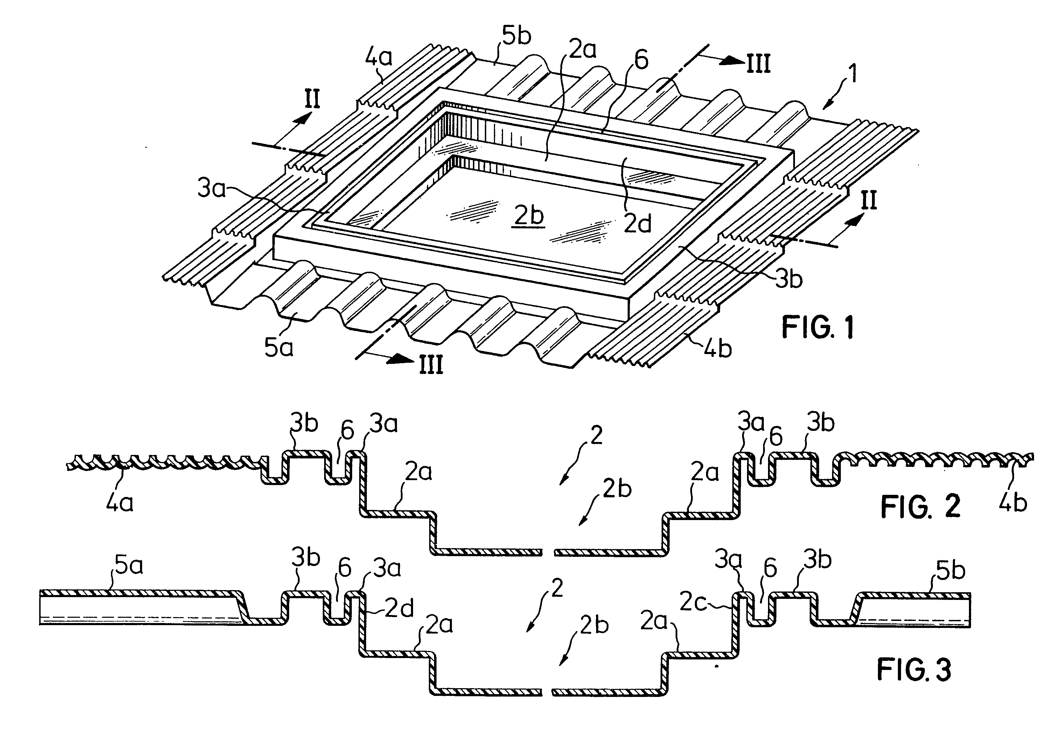

Figur 1 zeigt eine Aufsicht auf ein erfindungsgemäßes
        Gehäuse.

Figur 2 zeigt einen Schnitt entlang der Linie II - II
        von Figur 1.

Figur 3 zeigt einen Schnitt entlang der Linie III - III
        von Figur 1.


In den Figuren bedeuten:

1 Gehäuse für Solarkollektor

2 Wannenartiger Aufnahmebehälter für den Kollektor

2a Wannenbodenstufe

2b Bodenraum des Aufnahmebehälters 2

2c untere Seitenwand des Aufnahmebehälters 2

2d obere Seitenwand des Aufnahmebehälters 2

3a, 3b umlaufende Auflagefläche für eine lichtdurchlässige Abdeckung

4a, 4b verbreiterter Rand an der linken und rechten Seite
        des Aufnahmebehälters zum Ausgleich des Ziegelabstandes

5a, 5b in Form und Größe den zu ersetzenden Dachziegeln
        entsprechende untere und obere Seitenfläche

6   umlaufende Nut in der Auflagefläche.

Beispiel

Sonnenkollektor-Gehäuse zum Einbau in ein mit Frankfurter Pfannen zu deckendes oder gedecktes Dach.

Die Abmessungen des Gehäuses entsprechen 4 Reihen zu 2 1/2 Frankfurter Pfannen. Es enthält vor der Installation bereits fertig eingebaut einen bekannten Absorber. Dieser ruht auf einer etwa 2 cm starken Isolierschicht auf der Wannenstufe 2a. Der Bodenraum 2b ist ebenfalls mit einer Isolierschicht ausgefüllt. Auch seitlich ist der Absorber selbstverständlich ohne Wärmebrücken umlaufend isoliert. Wie bei anderen bekannten Konstruktionen ist zur Seite des Lichteinfalls eine lichtdurchlässige Folie und abschließend eine stabile, ebenfalls lichtdurchlässige Haube, beispielsweise aus Polymethylmethacrylat, oder eine plane Platte, beispielsweise aus Glas, angebracht. Im Falle der Verwendung einer PMMA-Haube mit abgewinkelten Rändern sitzt diese auf der umlaufenden Auflagefläche 3a und ist mit Schrauben oder Klemmvorrichtungen befestigt. Im Falle der Verwendung einer planen Platte dienen sowohl die umlaufende Auflagefläche 3a als auch 3b zur Unterstützung. Die umlaufende Nut 6 dient zur Aufnahme von handelsüblichen Dichtungsmaterialien.

Die Abstufung des Aufnahmebehälters 2 zum Bodenraum 2b durch die Stufe 2a erhöht die Verwindungssteifigkeit des Gehäuses.

Die Zuleitung des wärmetauschenden Mediums zum Absorber ist durch die (untere) Seitenwand 2c geführt, die Ableitung durch die (obere) Seitenwand 2d. Die Bezeichnungen "untere" und "obere" beziehen sich auf die Lage im Dach nach der Installation.

Die Seitenflächen 4a und 4b sind so gestaltet, daß Frankfurter Pfannen auf der einen Seite übergreifen (4a) bzw. auf der anderen seite untergreifen (4b). Die Konturen sind so ausgeführt, daß sie mit dem Verlauf der Konturen der Ziegel genau übereinstimmen. Durch die entstehenden Überlappungen wird wie bei einem Ziegeldach eine ausreichende Abdichtung ohne zusätzliche Mittel erreicht.

Das gleiche gilt für die Seitenflächen 5a und 5b, die den Querkonturen der Dachziegel entsprechend ausgebildet sind.

Das Breitenmaß der Seitenfläche 4a und 4b wurde so gewählt, daß eine Verschiebung des Gehäuses um eine halbe Ziegelbreite erfolgen kann. Überflüssige Breiten können bei der Installation abgetrennt werden. Dies ist dann erforderlich, wenn, wie in den meisten Fällen, das Rastermaß der Dachsparren nicht mit dem der Ziegel übereinstimmt.

0029180

HOE 79/F 310

PATENTANSPRÜCHE

1. Gehäuse aus thermoplastischem Kunststoff für Solarkollektoren zum Einbau in übliche Ziegeldächer durch Ersatz einer Gruppe von Ziegeln, dadurch gekennzeichnet, daß es aus einem wannenartigen Aufnahmebehälter für den Solarkollektor besteht, der von einer umlaufenden Auflagefläche für eine lichtdurchlässige Abdeckung und einem in Form und Größe der zu ersetzenden Dachziegel-Gruppe entsprechenden Rand umgeben ist, wobei die Ränder an der linken und rechten Seite des Aufnahmebehälters bei der Herstellung so breit belassen sind, daß ein unterschiedlicher Abstand der anschließenden Ziegelreihen um die Breite von 1/2 Ziegel ausgeglichen werden kann, und wobei der Aufnahmebehälter so tief ausgebildet ist, daß er zwischen die Dachsparren eintaucht.

2. Gehäuse für Solarkollektoren nach Anspruch 1, dadurch gekennzeichnet, daß der wannenartige Aufnahmebehälter 500 - 700 mm breit und 900 - 1200 mm lang ist.

3. Gehäuse für Solarkollektoren nach Anspruch 1 und 2, dadurch gekennzeichnet, daß der Aufnahmebehälter eine Tiefe von 70 - 100 mm hat.

4. Gehäuse für Solarkollektoren nach Anspruch 1 bis 3, dadurch gekennzeichnet, daß der Wannenboden stufenförmig vertieft ist.

5. Gehäuse für Solarkollektoren nach Anspruch 1 bis 4, dadurch gekennzeichnet, daß die umlaufende Auflagefläche eine Breite von 30 - 80 mm hat.

6. Gehäuse für Solarkollektoren nach Anspruch 1 bis 5, dadurch gekennzeichnet, daß die umlaufende Auflagefläche durch eine umlaufende Nut unterbrochen ist.

7. Gehäuse für Solarkollektoren nach Anspruch 1 bis 6, dadurch gekennzeichnet, daß es aus einer extrudierten Platte tiefgezogen ist.

8. Gehäuse für Solarkollektoren nach Anspruch 1 bis 7, dadurch gekennzeichnet, daß es aus einem elastifizierten Polyvinylchlorid oder einem kautschukmodifizierten Polystyrol oder Polyäthylen oder Polypropylen besteht.

9. Gehäuse für Solarkollektoren nach Anspruch 1 bis 8, dadurch gekennzeichnet, daß es aus mit Äthylen-Propylen-Dien-Kautschuk modifiziertem Polystyrol besteht.

10. Gehäuse für Solarkollektoren nach Anspruch 1 bis 9, dadurch gekennzeichnet, daß es aus einem einen verstärkenden Füllstoff enthaltenden Polymerisat besteht.

11. Gehäuse für Solarkollektoren nach Anspruch 1 bis 9, dadurch gekennzeichnet, daß es eine Integral-Schaumkörper-Struktur mit fester äußerer Haut und geschäumtem Kern aufweist.

0029180

FIG. 1

FIG. 2

FIG. 3

# EUROPÄISCHER RECHERCHENBERICHT

**Europäisches Patentamt**

0029180

Nummer der Anmeldung

EP 80106833.9

| Kategorie | Kennzeichnung des Dokuments mit Angabe, soweit erforderlich, der maßgeblichen Teile | betrifft Anspruch |
|---|---|---|
| **EINSCHLÄGIGE DOKUMENTE** | | |
| D | <u>DE - A1 - 2 641 073</u>  (E.CACARDA GMBH)<br><br>+ Gesamt +<br><br>-- | 1,2,10 |
| | <u>DE - A1 - 2 602 814</u>  (MASCHINENFA-BRIK AUGSBURG NÜRNBERG AG)<br><br>+ Gesamt +<br><br>-- | 1,6,11 |
| | <u>DE - A1 - 2 717 667</u>  (RHEINISCHES ZINKWALZWERK GMBH & CO KG)<br><br>+ Gesamt +<br><br>-- | 1,2,4 |
| D | <u>DE - A1 - 2 642 732</u>  (VINZ SIEG-FRIED)<br><br>+ Fig. 3 +<br><br>-- | 1,6 |
| D | <u>DE - A1 - 2 729 313</u>  (VOGT HANS)<br><br>+ Seite 7 +<br><br>---- | 1 |

**KLASSIFIKATION DER ANMELDUNG (Int Cl.3)**

F 24 J   3/02

**RECHERCHIERTE SACHGEBIETE (Int. Cl.3)**

F 24 J

E 04 B

E 04 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theórien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 19-01-1981 | SCHMIDT |

EPA form 1503.1   06.78